Europäisches Patentamt

European Patent Office

Office européen des brevets

(19)

(11) Veröffentlichungsnummer: **0 263 859 B1**

(12) # EUROPÄISCHE PATENTSCHRIFT

(45) Veröffentlichungstag der Patentschrift:
07.08.91 Patentblatt 91/32

(51) Int. Cl.⁵: **B09B 3/00**, C04B 33/13,
C02F 11/00

(21) Anmeldenummer: 87902486.7

(22) Anmeldetag: 08.04.87

(86) Internationale Anmeldenummer:
PCT/EP87/00190

(87) Internationale Veröffentlichungsnummer:
WO 87/06163 22.10.87 Gazette 87/23

(54) **VERFAHREN ZUR AUFBEREITUNG VON FILTERSTÄUBEN, BAGGERSCHLÄMMEN (HAFENSCHLAMM) UND DERGL. ABFALLMATERIALIEN FÜR DIE ENDLAGERUNG.**

(30) Priorität: 12.04.86 DE 3612381

(43) Veröffentlichungstag der Anmeldung:
20.04.88 Patentblatt 88/16

(45) Bekanntmachung des Hinweises auf die
Patenterteilung:
07.08.91 Patentblatt 91/32

(84) Benannte Vertragsstaaten:
AT BE CH FR GB IT LI LU NL SE

(56) Entgegenhaltungen:
EP-A- 0 128 966
DE-A- 2 336 267
DE-A- 2 401 411
DE-C- 586 332

(73) Patentinhaber: BLOCK, Werner
Durchhardtstrasse 19
W-6338 Hüttenberg-Weidenhausen (DE)

(72) Erfinder: BLOCK, Werner
Durchhardtstrasse 19
W-6338 Hüttenberg-Weidenhausen (DE)

(74) Vertreter: Eyer, Eckhardt Philipp, Dipl.-Ing. et
al
Patentanwälte Eyer & Linser
Robert-Bosch-Strasse 12a
W-6072 Dreieich (DE)

EP 0 263 859 B1

## Beschreibung

Die Erfindung betrifft ein Verfahren zur Aufbereitung von Filterstäuben, Baggerschlämmen (Hafenschlamm) und dergl. Abfallmaterialien für die Endlagerung.

Die Entsorgung von Staubmaterialien und Schlämmen, beispielsweise Filterstäuben und Baggerschlämmen aus Wasserbauanlagen (Seehäfen) stellt ein erhebliches Problem dar im Hinblick darauf, daß diese Materialien in grösseren Anteilen Schadstoffe, insbesondere Schwermetalle (Sn, Pb, Zn, Fe und Cd) enthalten und in die Gruppen "belastete Industrieabfälle" (Stufe 3) oder "Sondermüll" (Stufe 4) klassifiziert und damit zur Ablagerung einer Sonderbehandlung unterworfen werden müssen. Bisher erfolgt die Entsorgung derartiger Abfälle in der Weise, daß sie — soweit sie nicht auf entsprechend vorbereiteten und/oder ausgewählten Deponien abgelagert werden, was in der Regel große Vorbereitungs- und Transportkosten verursacht — u.a. mit Zement zu Betonklötzen vergossen werden. Der Nachteil dieser Behandlung liegt einerseits darin, daß der Anteil von Staub- bzw. Abfallmaterial im Fomkörper auf einen Gehalt von nur maximal 28 Gew.-% des beschränkt bleiben muß und daß andererseits trotz des erheblichen Kostenaufwandes der Einsiegelung der Abfälle in einem Zementkörper eine unbedenkliche Endlagerung nicht möglich ist, weil die Schadmaterialien bzw. Giftstoffe witterungsbedingt aus dem Körper ausgelaugt werden. Auch diese Körper sind daher für die Ablagerung als belastete Industrieabfälle (Stufe 3) zu behandeln, was eine Ablagerung auf Spezialdeponien mit den eingangs dargestellten Nachteilen erforderlich macht.

Es ist aus der DE-A-2336267 ein Verfahren zur Beseitigung von Klärschlamm bekannt geworden, bei dem aus Klärschlamm durch Zentrifugieren separierte Rückstände in Ziegelton eingebunden und mit diesem zu Ziegelformlingen gepreßt und gebrannt werden. Hierbei kann der Mischung in geringem Umfang zur ebenfalls Entsorgung Altöl zugefügt werden, das beim Brennen der Ziegel ausbrennt und damit — neben der Entsorgung — gleichzeitig als Brennmaterial dient. Dieses Verfahren führt nicht zu einer den Anforderungen genügenden Entsorgung von Schwermetalle enthaltenden Abfallmaterialien insofern, als ihre gegen Auswaschen aus dem Formkörper sichernde Einbindung in das Tonmaterial durch einfaches Brennen nicht gewährleistet werden kann. Der Zusatz von Altöl führt insoweit nicht zu einer Verbesserung, da es einerseits lediglich als Brennmaterial dient und während der Ziegelherstellung ausgebrannt wird und andererseits durch die Zugabe von Altöl eine Veränderung der Kapillarität und der Wasserbindungskräfte des bindigen Materials nicht herbeigeführt werden kann.

Es ist weiterhin aus der DE-A-2401411 ein Verfahren zur Herstellung flüssigkeitsabweisender Kapillarbaustoffe bekannt geworden, bei dem der keramische Masse hydrophobierende Mittel zugesetzt werden sollen. Der vorliegenden Erfindung liegt ein solches Verfahren nicht zugrunde.

Der vorliegenden Erfindung liegt als Aufgabe die Schaffung eines Verfahrens zugrunde, durch das Giftstoffe enthaltende Materialien der genannten Art auf einfache und kostengünstige Weise derart aufbereitet werden können, daß sie als Abfälle der Bedenklichkeitsstufe 1 (Hausmüll) bewertet und demgemäß auf einfachen Hausmülldeponien dauerhaft abgelagert werden können. Die Erfindung besteht darin, daß dem Abfallmaterial bezw. der das Abfallmaterial enthaltenden Mischung zur Herabsetzung der Kapillarität sowie durch katalytischen Ionenaustausch der Wasserbindungskräfte des bindigen Materials sulfoniertes wasserlösliches Öl zu gesetzt wird.

Durch die Erfindung ist ein Verfahen geschaffen, mit dessen Hilfe die aus toxisch hochbelasteten Staub- und Schlamm-Abfällen toxisch unbedenkliche Formkörper der Bedenklichkeitstufe 1 hergestellt werden können dadurch, daß sie in eine Matrix aus einem bindigen Material eingebunden und die Wasserbindungskräfte des Matrixmaterials anschließend durch katalytischen Ionenaustausch so weit wie möglich verringert wird. Es wird auf diese Weise eine Wasseraufnahme des Formkörpers, die die Grundlage für das Auswaschen der Schadstoffe darstellen würde, absolut verhindert, wobei als Zusatzmaterial vorteilhaft sulfoniertes wasserlösliches Öl (Produkt "CBV 75" der Firma Zel-Chemie von Elverfeldt KG bzw. "RRP" der Firma Reynolds) Verwendung findet. Bindige Materialien, die als Matrixmaterial eingesetzt werden, stehen in Form von Ton und Lehm in der Natur in praktisch unbegrenzter Menge zur Verfügung, so daß zu deren Herstellung ein wesentlicher Kostenaufwand nicht erforderlich ist. Ein weiterer wesentlicher Vorteil des Verfahrens der Erfindung ist auch darin zu sehen, daß — im Vergleich zu einer Zementmatrix — nach dem Verfahren der Erfindung ein wesentlich höherer Anteil an Staub- bzw. Abfallmaterial — bis zu 70 Gew.-%, bezogen auf die Gesamtmenge — im Matrixmaterial gebunden werden kann. Darüberhinaus entfallen im Hinblick auf die Ablagerungsfähigkeit des Materials in einer einfachen Hausmülldeponie die bisher erforderlichen großen Transportwege und damit Kosten für den Transport zur Sonderdeponie. Alles in allem ergeben sich — ohne Berücksichtigung von Transportkosten — nach dem Verfahren der Erfindung Einsparungen von mehr als 20% der nach der bisherigen Arbeitsweise erforderlichen Kosten.

Die Formkörper können in gepreßter und luftgetrockneter Form (bei trockener Lagerung) abgelagert werden, sie werden jedoch zweckäßig zur weiteren Verbesserung der physikalischen und chemischen Festigkeit bei einer Temperatur zwischen 400°C und 1400°C hitzebehandelt, vorzugsweise zwischen 600°C und 800°C hartgebrannt oder zwischen 1100°C und 1200°C gesintert werden. Die so entstehenden Formkörper können ohne weiteres in jeder Atmosphäre abgelagert werden.

Die Erfindung wird nachstehend anhand zweier Ausführungsbeispiele erläutert.

## Beispiel 1

Es werden 1000 kg Filterstaub aus einer Kupolofen-Rauchgasreinigung mit 500 kg trockenem Lehm gemischt und mit wenig Wasser, in dem vor der Zugabe 300 cl sulfoniertes wasserlösliches Öl (CBV-75 der Firma Zel-Chemie Elverfeld KG) gelöst worden waren, zu einer homogenen angeteigten Masse gemischt. Die Masse wird anschließend in entsprechenden Formen unter einem Druck von 70 kg/cm² zu beispielsweise zylindrischen Formkörpern mit einem Durchmesser sowie einer Höhe von jeweils 50 mm verpreßt. Die Formkörper haben nach dem Verpressen eine Bruchfestigkeit von 15 kg/cm², die zur Ablagerung in einer Deponie ausreicht. Ihr Gewicht beträgt ca. 150 g. Es erfolgt anschließend ein Brennvorgang bei einer Temperatur von 1300°C während einer Zeit von 5 Min. Die Bruchfestigkeit nach dem Brennen betägt 20 kg/cm². Nach kurzzeitigem Eintauchen in Wasser berägt das Gewicht wiederum ca 150 g. Eine Veränderung des pH-Wertes von Wasser tritt nicht ein, und zwar weder in stehendem noch in fließendem (im Umlauf umgewälzten) Wasser, woraus erkennbar wird, daß ein Auslösen von löslichen Bestandteilen aus dem Formkörper nicht erfolgt.

## Beispiel 2

Es werden 1000 kg Filterstaub aus einer Kupolofen-Rauchgasreinigung mit 1000 kg trockenem Lehm gemischt und mit wenig Wasser, in dem vor der Zugabe 500 cl sulfoniertes wasserlösliches Öl (CBV-75 der Firma Zel-Chemie Elverfeldt KG) gelöst worden waren, zu einer homogenen angeteigten Masse gemischt. Die Masse wird anschließend in entsprechenden Formen unter einem Druck von 75 kg/cm² zu beispielsweise zylindrichen Formkörpern mit einem Durchmesser sowie einer Höhe von jeweils 50 mm verpreßt. die Formkörper haben nach dem Pressen eine Bruchfestigkeit von 20 kg/cm², die zur Ablagerung in einer Deponie ausreicht. Ihr Gewicht beträgt ca. 200 g. Es erfolgt anschließend ein Brennvorgang bei einer Temperatur von 1300°C während einer Zeit von 5 Min. Die Bruchfestigkeit nach dem Brennen beträgt 30 kg/cm². Nach kurzzeitigem Eintauchen in Wasser beträgt das Gewicht wiederum ca. 200 g. Eine Veränderung des pH-Wertes von Wasser tritt nicht ein, und zwar weder in stehendem noch in fließendem (im Umlauf umgewälzten) Wasser, woraus erkennbar wird, daß eine Auslösen von löslichen Bestandteilen aus dem Formkörper nicht erfolgt.

## Beispiel 3

3000 kg Baggerschlamm (Hafenschlamm) mit einem Feststoffanteil von (30)%, entsprechend 900 kg werden 2200 kg trockener Ton eingerührt und in die gebildete Slurry 1,4 l sulfoniertes wasserlösliches Öl (CBV-75) eingerührt. Durch die Zugabe des sulfonierten Öls tritt unmittelbar eine Entionisierung der ionisierten Bestandteile ein mit der Wirkung, daß sich die Feststoffbestandteile innerhalb einer Zeit von etwa 12 Stunden schichtenweise unter Austreibung des Wassers absetzen, wobei die unterste Schicht von den sandigen und die darüberlagernde Schicht von den übrigen bestandteilen gebildet ist. Hierbei lagern sich die Schwermetalle, die in diesem Falle insbesondere von Cadmium gebildet sind, quantitativ an den Lehmpartikeln an. Nach dekantieren bzw. Abpumpen des Wassers wird die die Schadstoffe enthaltende Lehmschicht in der in Beispiel 1 beschriebenen Weise zu Formkörpern verpreßt und anschließend bei einer Temperatur von 700°C hartgebrannt. Die Bruchfestigkeit der auf diese Weise gebildeten Formkörper beträgt in diesem Falle 25 kg/mm².

## Patentansprüche

1. Verfahren zur Aufbereitung von Filterstäuben, Baggerschlämmen (Hafenschlamm) oder dergl. Abfallmaterialien für die Endlagerung, bei dem die Abfallmaterialien mit Ton oder Lehm als bindiges Material gemischt und nach Formung zu einem Formling gebrannt wird, dadurch gekennzeichnet, daß dem Abfallmaterial bezw. der das Abfallmaterial enthaltenden Mischung zur Herabsetzung der Kapillarität sowie durch katalytischen Ionenaustausch der Wasserbindungskräfte des bindigen Materials sulfoniertes wasserlösliches Öl zu gesetzt wird.

2. Verfahren nach Anspruch 1, dadurch gekennzeichnet, daß die Formkörper bei einer Temperatur zwischen 400°C und 1400°C hitzebehandelt, vorzugsweise zwischen 600°C und 900°C hartgebrannt oder zwischen 1100°C und 1200°C gesintert werden.

3. Verfahren nach einem der Ansprüche 1, 2, dadurch gekennzeichnet, daß dem Abfallmaterial das bindige Material in einer Menge zwischen 30 und 60 Gew.-%, bezogen auf die Gesamtmenge und der Mischung das Zusatzmaterial in einer Menge zwischen 0,4 und 1.0 l je to, bezogen auf den bindigen Anteil in der Mischung, zugesetzt wird.

## Claims

1. Method for preparing filter dusts, dredging sludges (harbour sludge) or similar waste materials for final storage, in which the waste materials are mixed with clay or loam as the binding material and burnt after being moulded to form a moulded body, characterised in that sulphonated, water-soluble oil is added to the waste material or to the mixture containing the waste material, to reduce the capillarity as well as, by catalytic ion exchange, the water-absorptive capacity of the binding material.

2. Method according to claim 1, characterised in that the moulded bodies are heat-treated at a temperature of between 400°C and 1400°C, preferably hard-burnt at a temperature of between 600°C and 900°C or sintered at a temperature of between 1100°C and 1200°C.

3. Method according to one of claims 1, 2, characterised in that the binding material is added to the waste material in an amount of between 30 and 60% by weight, in relation to the total amount, and the additional material is added to the mixture in an amount of between 0.4 and 1.0 litre per tonne relative to the binder content in the mixture.

## Revendications

1. Procédé de traitement de poussières de filtration, de boues de dragage (boues portuaires) et de déchets similaires en vue de leur stockage définitif, procédé dans lequel les déchets sont mélangés avec de l'argile ou de la glaise servant de liant et sont cuits après avoir été moulés sous forme d'une briquette, caractérisé en ce qu'une huile sulfonée soluble dans l'eau est ajoutée aux déchets ou au mélange contenant les déchets pour abaisser la capillarité et, par échange d'ions catalytique, les forces de liaison que présente le liant vis-à-vis de l'eau.

2. Procédé selon la revendication 1, caractérisé en ce que les corps moulés sont traités par la chaleur à une température comprise entre 400°C et 1400°C, étant de préférence durcis par cuisson entre 600°C et 900°C ou frittés entre 1100°C et 1200°C.

3. Procédé selon la revendication 1 ou 2, caractérisé en ce que le liant est ajouté aux déchets dans une proportion comprise entre 30 et 60% en poids par rapport à la quantité totaie, et en ce que l'additif est ajouté au mélange dans une proportion comprise entre 0,4 et 1,0 l par tonne, par rapport à la part du liant dans le mélange.